**Europäisches Patentamt**

**European Patent Office**

**Office européen des brevets**

(19)

(11) Veröffentlichungsnummer: **0 014 872**
**B1**

(12) **EUROPÄISCHE PATENTSCHRIFT**

(45) Veröffentlichungstag der Patentschrift:
**23.06.82**

(21) Anmeldenummer: **80100502.6**

(22) Anmeldetag: **01.02.80**

(51) Int. Cl.³: **C 08 L 23/12**

(54) Mischungen aus Polypropylen und flüssigen, gesättigten Diorganopolysiloxanen.

(30) Priorität: **13.02.79 DE 2905357**

(43) Veröffentlichungstag der Anmeldung:
**03.09.80 Patentblatt 80/18**

(45) Bekanntmachung des Hinweises auf die Patenterteilung:
**23.06.82 Patentblatt 82/25**

(84) Benannte Vertragsstaaten:
**DE FR GB IT**

(56) Entgegenhaltungen:
**DE-B-1 108 425**
**US-A-3 865 897**

(73) Patentinhaber: **BAYER AG, Zentralbereich Patente,
Marken und Lizenzen, D-5090 Leverkusen 1, Bayerwerk
(DE)**

(72) Erfinder: **Grigo, Ulrich, Dr., Steinstrasse 161,
D-4150 Krefeld (DE)**
Erfinder: **Morbitzer, Leo, Dr., Rungestrasse 50,
D-5000 Köln 80 (DE)**
Erfinder: **Arlt, Klaus-Peter, Dr., Anton-Aulke-Ring 9,
D-4401 Senden/Münster (DE)**
Erfinder: **Binsack, Rudolf, Dr., Bethelstrasse 4a,
D-4150 Krefeld (DE)**
Erfinder: **Merten, Josef, Dr., An der Blankstrasse 33a,
D-4052 Korschenbroich 1 (DE)**

# Mischungen aus Polypropylen und flüssigen, gesättigten Diorganopolysiloxanen

Die Erfindung betrifft homogene, thermoplastische Mischungen aus isotaktischem Polypropylen und flüssigen, gesättigten Diorganopolysiloxanen eines bestimmten Viskositätsbereiches.

Aus der BE-PS 648 526 (US-PS 3 326 880) ist es bekannt, vorwiegend kristalline Homo- oder Copolymerisate aus monoolefinisch ungesättigten Kohlenwasserstoffen mit 2 bis 4 Kohlenstoffatomen, insbesondere Propylen, mit 0,01 bis 5 Gew.-%, bezogen auf Mischungen, an Alkalimetallsalzen von verzweigten acyclischen gesättigten Monocarbonsäuren mit maximal 12 C-Atomen abzumischen. Zur weiteren Verstärkung der mechanischen Eigenschaften können in die Schmelze der vorgenannten Mischungen bis zu 20 Gew.-%, bezogen auf Gesamtmischung, an kautschukähnlichen Substanzen, z. B. Siliconkautschuke, eingearbeitet werden. Derartige gesättigte Siliconkautschuke haben Molgewichte von etwa 200 000—2 000 000 (vgl. DE-AS 1 669 851, Spalte 4, Zeilen 1—8). Handelsübliche Siliconkautschuke basieren nach »Chemie und Technologie der Silicone von W. Noll, 1968, Verlag Chemie, GmbH, Weinheim/Bergstraße, Seite 332, Kapitel Siliconkautschuk-Typen« vornehmlich auf kettenpolymeren Dimethylpolysiloxanen mit Molekulargewichten von etwa 300 000 bis 700 000.

Weiter ist es aus der DE-AS 2 430 949 u. a. bekannt, vernetzbare Mischungen aus Polypropylen und Vinyl- oder Allylgruppen enthaltendem Diorganopolysiloxangummi mit einer Williams-Plastizität von über 0,0508 cm (gemäß ASTM-D-926-67) herzustellen.

Schließlich ist bereits vorgeschlagen worden, niedermolekulare, flüssige Diorganopolysiloxane mit Viskositäten bis zu 3000 $\frac{mm^2}{s}$ bei 25°C mit Polyethylen abzumischen und zu Formkörpern gegebenenfalls unter Vernetzung zu extrudieren. Der Diorganopolysiloxanzusatz soll unerwünschtes Aneinanderkleben oder Aneinanderbacken der Formkörper z. B. Folien, Filme, Tabletten, Granulate usw. verhindern (vgl. US-PS 2 992 201) bzw. bei elektrischer Anwendung Koronentladungen vermeiden (vgl. GB-PS 1 294 986).

Es wurde nun überraschend gefunden, daß flüssige, gesättigte Diorganopolysiloxane des Viskositätsbereiches 30 000 bis 80 000 $\frac{mm^2}{s}$ bei 20°C schon in relativ geringen Mengen einen nachhaltigen Einfluß auf die mechanischen Eigenschaften von isotaktischem Polypropylen ausüben. So wird das elastische Verhältnis von Formkörpern aus erfindungsgemäßen Polypropylen/Diorganopolysiloxan-Mischungen schon bei geringen Diorganopolysiloxan-Zusätzen deutlich verbessert, während Wärmeformbeständigkeit und Steifigkeit weitgehend erhalten bleiben.

Mit steigenden Mengen an Diorganopolysiloxan im Bereich von 0,5—15 Gew.-% nimmt die bleibende Dehnung, ein Maß für die Elastizität der Formkörper, merklich ab. Als besonders günstig haben sich Diorganopolysiloxan-Zusätze von 3—7 Gew.-% herausgestellt.

Ein weiterer Vorteil der aus erfindungsgemäßen Mischungen hergestellten Formkörper aus Polypropylen und Diorganopolysiloxanen ist die verbesserte Kerbschlagzähigkeit. Obwohl die eingemischten, oligomeren Diorgano-Siloxane einen Stockpunkt < −40°C aufweisen, wird die Wärmeformbeständigkeit, ausgedrückt als Vicat-Temperatur, von Formkörpern aus erfindungsgemäßen Mischungen nur geringfügig erniedrigt.

Um die vorstehend genannten Eigenschaftsverbesserungen zu erzielen, ist es wichtig, Diorganopolysiloxane des Viskositätsbereiches 30 000 bis 80 000 $\frac{mm^2}{s}$ gemessen bei 20°C, einzusetzen. Diorganopolysiloxane mit geringeren Viskositäten als 30 000 $\frac{mm^2}{s}$ sind weniger gut geeignet, da sie bei der Verarbeitung leicht ausschwitzen können. Andererseits sind auch hochviskose Diorganopolysiloxane mit Viskositäten >80 000 cSt weniger gut geeignet, da möglicherweise ihre Diffusionsgeschwindigkeit nicht groß genug ist, um sich innerhalb des polymeren Werkstückes während einer mechanischen Beanspruchung — z. B. einer Dehnung — schnell genug zu verteilen.

Gegenstand der Erfindung sind somit homogene, thermoplastische Mischungen aus

A) 85—99,5 Gew.-% isotaktischem Polypropylen und
B) 15—0,5 Gew.-% flüssigen, gesättigten Diorganopolysiloxanen mit einer Viskosität von 30 000 bis 80 000 $\frac{mm^2}{s}$ bei 20°C.

Vorzugsweise bestehen die Mischungen aus 93—97 Gew.-% der Komponente A und 3—7 Gew.-% der Komponente B.

Als Diorganopolysiloxane kommen Dialkylpolysiloxane mit 1 bis 4 C-Atomen in den Alkylgruppen, Diphenylpolysiloxane und Methyl-phenylpolysiloxane im angegebenen Viskositätsbereich in Frage. Besonders wirksam sind die genannten Dialkylpolysiloxane, insbesondere Dimethylpolysiloxane.

Der angegebene Viskositätsbereich entspricht einem Molekulargewichtsmittel-Bereich von etwa 65 000 bis 100 000.

Für die erfindungsgemäß geeigneten Polyorganosiloxane wurden die mittleren Molekulargewichte nach der Barry'schen Beziehung (vgl. W. Noll, »Chemie und Technologie der Silicone«, 1968, Verlag Chemie GmbH, Weinheim/Bergstr., S. 218/219, Kap. Kettenpolymere) aus den Eigenviskositäten der Öle ermittelt.

Das erfindungsgemäß geeignete, isotaktische Polypropylen hat vorzugsweise einen isotaktischen Anteil von >90 Gew.-% und einen Schmelzindex (MFI) von 0,1—20 g/min bei 230°C und einer Belastung von 5 kg gemäß DIN 53735 (Entwurf). Als besonders günstig haben sich höhermolekulare Polypropylene mit einem Schmelzindex (MFI) von 0,1—5 g/10 min bei 230°C und einer Belastung von 5 kg erwiesen.

Die Herstellung des isotaktischen Polypropylens erfolgt in an sich bekannter Weise nach dem Ziegler-Natta-Verfahren unter Verwendung bekannter Katalysatorsysteme z. B. Titan-III-chlorid/Triäthylaluminium bzw. Diethylaluminiumchlorid.

Um den elastifizierenden Effekt der erfindungsgemäß einzusetzenden Diorganopolysiloxane im Polypropylen (PP) optimal auszunutzen, müssen die Polysiloxane möglichst homogen in das Polypropylen eingearbeitet werden. Dieses Vermischen mit dem Polypropylen kann entweder bei Raumtemperatur und anschließendem Erwärmen des Gemisches unter Einwirkung von Scherkräften oder direkt während des Aufschmelzens des Polypropylens erfolgen.

Die Mischungstemperatur muß jedoch hoch genug sein, um den Kunststoff völlig zu erweichen und ein möglichst gleichmäßiges Gemisch zu bilden. Sie beträgt bei einer Verarbeitung im Kneter bzw. Extruder im allgemeinen 170—270°C. Dem Gemisch können gewünschtenfalls Pigmente, Füllstoffe, Stabilisierungsmittel, Lichtschutzmittel oder andere geeignete oder modifizierende Ingredenzien einverleibt werden.

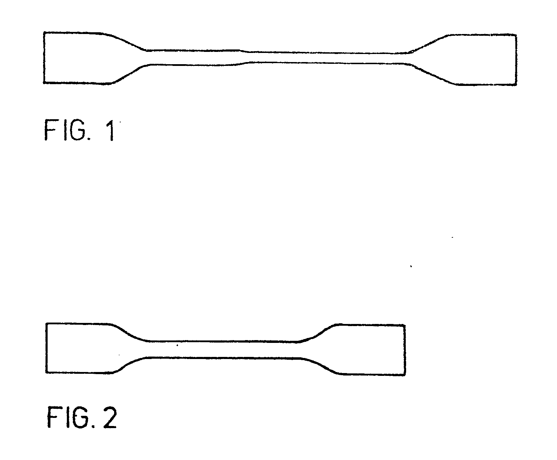

Um optimale gering bleibende Dehnungen zu erhalten, ist eine homogene Verteilung des Diorganopolysiloxans im PP notwendig. Werden an Schulterstäben aus solchem optimal hergestellten Material Dehnungsversuche durchgeführt, so ist im Vergleich zum reinen Polypropylen an der Mischung Polypropylen/Diorganopolysiloxan keine Schulterhalsbildung zu beobachten, während das reine Polypropylen eine ausgeprägte Schulterhalsbildung aufweist. Die Silhouetten der gedehnten Schulterstäbe (Länge 875 mm, Dicke 1 mm; nach 100% Dehnung) sind aus Figur 1 bzw. 2 ersichtlich. Die Figur 1 stellt die Sihouhette für einen gedehnten Schulterstab aus reinem Propylen, Figur 2 die Silhouette für einen gedehnten Schulterstab aus einer Mischung Polypropylen/Dimethylpolysiloxan gemäß Beispiel 2 dar.

Ob das Diorganopolysiloxan homogen im Polypropylen verteilt ist, kann durch elektronenmikroskopische Aufnahmen von dem Querschnitt eines Probekörpers festgestellt werden.

Die erfindungsgemäßen Mischungen zeigen gegenüber dem reinen Polypropylen eine ausgeprägte Verbesserung der elastischen Eigenschaften, wie bleibende Dehnung und Kerbschlagzähigkeit. Die erfindungsgemäßen Mischungen eröffnen demnach einen Weg, in der Hitze geformte Artikel mit hohen Polyolefin-Anteilen, d. h. hoher Wärmeformbeständigkeit, und verbesserter Elastizität herzustellen.

## Beispiele 1—3 und Vergleichsbeispiel 1 (Tabelle 1)

Das in den Mischungen bzw. im Vergleichsbeispiel 1 eingesetzte Polypropylen (PP) hatte einen isotaktischen Anteil von 96 Gew.-% und einen Schmelzindex von 3,0 g/10 min bei 230°C und 5 kg Belastung. Das eingesetzte Dimethylpolysiloxan hatte eine Viskosität von 50 000 cSt bei Raumtemperatur (20°C) und einen Stockpunkt von ca. —40°C. Das Dimethylpolysiloxan wurde vor dem eigentlichen Vermischen gut mit dem PP-Pulver in den angegebenen Mengenverhältnissen verrührt. Diese Mischung wurde in einen auf 170°C vorgeheizten 1 l-Innenkneter Typ GK 4 SU der Firma Werner & Pfleiderer, Stuttgart gefüllt und 7 min lang bei einer Drehzahl von 100 Upm und einem Stempeldruck von 2,5 bar Überdruck intensiv geknetet. Hierbei stieg die Massetemperatur auf 200—210°C. Das Knetprodukt wurde auf einer Walze (Walzentemperatur ca. 150°C) zum Fell ausgewalzt und anschließend granuliert.

Die Herstellung der Prüfkörper gemäß DIN 53 504, Nr. 3 (Normschulterstab, Länge: 180 mm, Dicke 4 mm) erfolgte zum Teil auf einer digital-gesteuerten Spritzgießmaschine (Typ ES 110—60) der Firma Engel KG, Schwertberg, Österreich bei einer Schneckendrehzahl von 130 Upm, einem Spritzdruck von 1075 bar und einer Düsentemperatur von 230°C. Zum Teil wurden aus dem Probekörper gemäß DIN 53 504, Nr. 3, jeweils die für die verschiedenen Prüfungen erforderlichen Probekörper mechanisch herausgearbeitet.

Die Prüfkörper zur Messung der bleibenden Dehnung (Normschulterstab: Länge 75 mm, Dicke 1 mm) wurden aus 1 mm starken Preßplatten herausgestanzt.

Die Prüfergebnisse der einzelnen Beispiele sind in der Tabelle 1 zusammengefaßt.

In den Beispielen 1—3 zeigt sich deutlich, daß mit steigenden Dimethylpolysiloxan-Zusätzen die elastischen Eigenschaften wie bleibende Dehnung und Kerbschlagzähigkeit im Vergleich zum reinen Polypropylen (Vergleichsbeispiel 1) stark verbessert werden. Das Fließverhalten (MFI) wird erst bei höheren Dimethylpolysiloxan-Zusätzen beeinflußt (Beispiel 3), während die Wärmeformbeständigkeit (Vicat-Erweichungstemperatur) nur geringfügig durch die Dimethylpolysiloxane herabgesetzt wird.

Die erfindungsgemäßen Produkte eignen sich also besonders zur Herstellung von elastischen, wärmeformbeständigen Formkörpern auf Polypropylen-Basis.

Tabelle 1

|  | Maßeinheit | Beispiel 1 | Beispiel 2 | Beispiel 3 | Vergleichs-beispiel 1 |
|---|---|---|---|---|---|
| Polypropylen | Gew.-Teile | 97,5 | 95 | 90 | 100 |
| Dimethylpolysiloxan | Gew.-Teile | 2,5 | 5,0 | 10,0 | — |
| Schmelzindex[1]) MFI (230°C/5 kg) | g/10 min | 3,3 | 3,6 | 10,2 | 3,0 |
| Bleibende Dehnung[2]) | % | 65 | 53 | 57 | 89 |
| Vicat-Erweichungs-temperatur[3]) | °C | 150 | 147 | 144 | 154 |
| Kerbschlagzähigkeit[4]) (23°C) | kJ/m$^2$ | 7,6 | 8,3 | 7,5 | 5,0 |

[1]) Nach DIN 53 735.
[2]) Meßmethode: Dehnung eines Normalschulterstabes (Länge 75 mm, Dicke 1 mm) auf doppelte Länge (100% Dehnung) mit einer Geschwindigkeit von = 10 mm/min; sofortige Entlastung, bei Spannung null wird bleibende Dehnung gemessen.
[3]) Nach DIN 53 460.
[4]) Nach DIN 53 453.

Beispiel 2 und Vergleichsbeispiele 2 und 3 (Tabelle 2)

Wie in den Beispielen 1—3 beschrieben, wurden aus Polypropylen und Dimethylpolysiloxan mit den Viskositäten (bei 20°C) von 25 000 $\frac{mm^2}{s}$, Stockpunkt −50°C, bzw. 100 000 $\frac{mm^2}{s}$, Stockpunkt −50°C Probekörper hergestellt und ausgeprüft. Die Ergebnisse sind in Tabelle 2 zusammengefaßt.

Aus den Vergleichsbeispielen 2 und 3 geht hervor, daß Mischungen aus isotaktischem Polypropylen und Diorganosiloxanen, die außerhalb des beanspruchten Viskositätsbereiches liegen, Formkörper mit wesentlich schlechteren mechanischen Eigenschaften ergeben.

Tabelle 2

| | Maßeinheit | Beispiel 2 | Vergl.-Beispiel 2 | Vergl.-Beispiel 3 |
|---|---|---|---|---|
| Polypropylen | Gew.-Teile | 95 | 95 | 95 |
| Dimethylpolysiloxan | Gew.-Teile | 5 | 5 | 5 |
| Viskosität des Dimethyl-polysiloxans | $\frac{mm^2}{s}$ bei 20°C | 50 000 | 25 000 | 100 000 |
| Schmelzindex[1]) MFI (230°C/5 kg) | g/10 min | 3,6 | 4,5 | 3,5 |
| Bl. Dehnung[2]) | % | 53 | 68 | 64 |
| Vicat-Erweichungspunkt-temperatur[3]) | °C | 147 | 145 | 146 |
| Kerbschlagzähigkeit[4]) (23°C) | kJ/m$^2$ | 8,3 | 6,9 | 7,4 |

[1]) [2]) [3]) [4]) } Vgl. Tabelle 1.

**Patentansprüche**

1. Homogene, thermoplastische Mischungen aus

A) 85—99,5 Gew.-% isotaktischem Polypropylen und
B) 15—0,5 Gew.-% flüssigen, gesättigten Diorganopolysiloxanen mit einer Viskosität von 30 000 bis 80 000 $\frac{mm^2}{s}$ bei 20°C.

2. Homogene thermoplastische Mischung nach Anspruch 1, dadurch gekennzeichnet, daß das Polypropylen einen isotaktischen Anteil von mehr als 90 Gew.-% und einen Schmelzindex von 0,1—20 g/10 min bei 230°C und einer Belastung von 5 kg besitzt.

3. Homogene thermoplastische Mischungen nach Anspruch 1 und 2, dadurch gekennzeichnet, daß das Dialkylpolysiloxan ein Dialkylpolysiloxan mit 1—4 C-Atomen in den Alkylgruppen ist.

4. Homogene thermoplastische Mischung nach Anspruch 3, dadurch gekennzeichnet, daß das Diorganopolysiloxan Dimethylpolysiloxan ist.

5. Homogene thermoplastische Mischung nach Anspruch 1 und 2, dadurch gekennzeichnet, daß das Diorganopolysiloxan Methyl-phenylpolysiloxan ist.

**Claims**

1. Homogeneous thermoplastic mixtures comprising

(A) from 85 to 99.5% by weight of isotactic polypropylene and
(B) from 15 to 0.5% by weight of liquid, saturated diorganopolysiloxanes having a viscosity of from 30,000 to 80,000 $\frac{mm^2}{s}$ at 20°C.

2. A homogeneous thermoplastic mixture according to Claim 1, characterised in that the polypropylene has an isotactic portion of more than 90% by weight and a melt index of from 0.1 to 20 g/10 min at 230°C and under a load of 5 kg.

3. Homogeneous thermoplastic mixtures according to Claims 1 and 2, characterised in that the dialkylpolysiloxane is a dialkylpolysiloxane having from 1 to 4 carbon atoms in each alkyl group.

**0 014 872**

4. A homogeneous thermoplastic mixture according to Claims 3, characterised in that the diorganopolysiloxane is a dimethylpolysiloxane.

5. A homogeneous thermoplastic mixture according to Claim 1 and 2, characterised in that the diorganopolysiloxane is a methylphenylpolysiloxane.

## Revendications

1. Mélanges thermoplastiques homogènes de

A) 85—99,5% en poids de polypropylène isotactique et

B) 15—0,5% en poids de diorganopolysiloxanes saturés liquides ayant une viscosité de 30 000 à 80 000 $\frac{mm^2}{s}$ à 20°C.

2. Mélange thermoplastique homogène suivant la revendication 1, caractérisé en ce que le polypropylène possède une portion isotactique de plus de 90% en poids et un indice de fusion de 0,1—20 g/10 min à 230°C et sous une charge de 5 kg.

3. Mélanges thermoplastiques homogènes suivant les revendications 1 et 2, caractérisés en ce que le dialkylpolysiloxane est un dialkylpolysiloxane ayant 1 à 4 atomes de carbone dans les groupes alkyle.

4. Mélange thermoplastique homogène suivant la revendication 3, caractérisé en ce que le diorganopolysiloxane est le diméthylpolysiloxane.

5. Mélange thermoplastique homogène suivant les revendications 1 et 2, caractérisé en ce que le diorganopolysiloxane est le méthylphénylpolysiloxane.

6

FIG. 1

FIG. 2